# EUROPÄISCHE PATENTANMELDUNG

(11) **EP 4 446 967 A1**
(43) Veröffentlichungstag der Anmeldung: **16.10.2024**
(21) Anmeldenummer: 23167670.1
(22) Anmeldetag: 13.04.2023
(51) Int. Cl.: G06Q 10/20, G06Q 10/30

(54) **VERFAHREN ZUM BETREIBEN EINES UNTERSTÜTZUNGSSYSTEMS FÜR EINE NUTZUNG EINER ANLAGE MIT ZUMINDEST EINER ELEKTRONISCHEN KOMPONENTE, COMPUTERPROGRAMMPRODUKT, COMPUTERLESBARES SPEICHERMEDIUM SOWIE UNTERSTÜTZUNGSSYSTEM**

(71) Anmelder: Siemens Aktiengesellschaft, 80333 München (DE)
(72) Erfinder: Franke, Martin, 14089 Berlin (DE); Müller, Katrin, 10713 Berlin (DE)
(74) Vertreter: Siemens Patent Attorneys

(57) **Zusammenfassung**

Die Erfindung betrifft ein Verfahren zum Betreiben eines Unterstützungssystems (10) für eine Nutzung einer Anlage (12) mit zumindest einer elektronischen Komponente (14), mit den Schritten:
- Vorgeben einer Restlaufzeit der Anlage (12) mittels einer elektronischen Recheneinrichtung (16) des Unterstützungssystems (10); (S1)
- Erfassen eines die Anlage (12) aktuell charakterisierenden Parameters (22) mittels einer Erfassungseinrichtung (18) des Unterstützungssystems (10); (S2)
- Bestimmen einer Restlebenszeit der zumindest einen elektronischen Komponente (14) in Abhängigkeit von dem Parameter (22) mittels der elektronischen Recheneinrichtung (16); (S3)
- Bestimmen eines Ersatzszenarios (24) für die zumindest eine elektronische Komponente (14) in Abhängigkeit von der Restlebenszeit. (S4)

Ferner betrifft die Erfindung ein Computerprogrammprodukt, ein computerlesbares Speichermedium sowie ein Unterstützungssystem (10).

## Beschreibung

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zum Betreiben eines Unterstützungssystems für eine Nutzung einer Anlage mit zumindest einer elektronischen Komponente gemäß dem geltenden Patentanspruch 1. Ferner betrifft die Erfindung ein Computerprogrammprodukt, ein computerlesbares Speichermedium sowie ein Unterstützungssystem.

Bei definierter Anlagen-Endlaufzeit sind häufig eingesetzte Komponenten noch nicht am Ende ihrer Lebensdauer und bei Rückbau der Anlagen landen wertvolle und funktionsfähige Ressourcen, insbesondere Steuerungs- und Elektronikkomponenten im Abfall. Gleichzeitig liegt es im Interesse des Betreibers, möglichst keine Neu-Investition durchführen zu müssen, sondern mit den bestehenden Komponenten die Anlage bis zur Endlaufzeit betreiben zu können.

Für Anlagen mit definierter Endlaufzeit, beispielsweise in Produktionsanlagen für Verbrennungsmotoren bis 2035, stellt sich damit die Frage, wie ohne Neu-Investition die definierte Laufzeit und technische Verfügbarkeit, zum Beispiel elektronische Steuerungskomponenten, sichergestellt werden können.

Bisher wurden hierzu Anlagenkomponenten bei Ausfall durch Neu-Komponenten ersetzt beziehungsweise im Rahmen des Predictive Maintenance periodisch vorbeugend ausgetauscht. Eine Bewertung der Restlebenszeit der Anlagenkomponenten erfolgt nicht. Eine Verwendung von gebrauchten Komponenten in Abhängigkeit der Restlaufzeit der Anlagen erfolgt ebenfalls nicht.

Aufgabe der vorliegenden Erfindung ist es, ein Verfahren, ein Computerprogrammprodukt, ein computerlesbares Speichermedium sowie ein Unterstützungssystem zu schaffen, mittels welchen eine Wiederverwendbarkeit von elektronischen Komponenten für Anlagen erhöht werden kann.

Diese Aufgabe wird durch ein Verfahren, ein Computerprogrammprodukt, ein computerlesbares Speichermedium sowie ein Unterstützungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines Unterstützungssystems für eine Nutzung einer Anlage mit zumindest einer elektronischen Komponente. Es wird eine Restlaufzeit der Anlage mittels einer elektronischen Recheneinrichtung des Unterstützungssystems vorgegeben. Es wird ein die Anlage aktuell charakterisierender Parameter mittels einer Erfassungseinrichtung des Unterstützungssystems erfasst. Es erfolgt das Bestimmen einer Restlebenszeit der zumindest einen elektronischen Komponente in Abhängigkeit von dem Parameter mittels der elektronischen Recheneinrichtung und das Bestimmen eines Ersatzszenarios für die zumindest eine elektronische Komponente in Abhängigkeit von der Restlebenszeit.

Insbesondere ist somit ein Verfahren zur Auswahl ökologisch und ökonomisch sinnvoller Szenarien zur Erreichung einer notwendigen Anlagenlaufzeit durch die Nutzung von beispielsweise gebrauchten elektronischen Komponenten ermöglicht. Insbesondere kann somit ein automatisiertes Werkzeug geschaffen werden, das manuelle Entscheidungen von Personen, insbesondere auf Basis von subjektiven Erfahrungswerten, ersetzt.

Insbesondere kann somit ein theoretischer Ausfallzeitpunkt der Anlage, insbesondere einer Anlage zur Produktion von Bauteilen, und der zu überbrückende Zeitraum beziehungsweise die noch zu fertigende Stückzahl bestimmt werden. Es können dann entsprechende Empfehlungen beziehungsweise Ersatzszenarien ausgegeben werden, welche einen Nutzer des Unterstützungssystems anleiten können, wie die Anlage mit beispielsweise Ersatzteilkomponenten, neuen Komponenten oder durch die Anpassung eines Anlagenbetriebs entsprechend bereitgestellt werden können.

Gemäß einer vorteilhaften Ausgestaltungsform wird als Ersatzszenario ein Wechsel der elektronischen Komponente bestimmt. Insbesondere kann beispielsweise die Ausfallwahrscheinlichkeit beziehungsweise der Ausfallzeitpunkt der elektronischen Komponente bestimmt werden. Hierzu kann dann vorgesehen sein, dass zu einem vorgegebenen Zeitpunkt ein Wechsel der elektronischen Komponente als Ersatzszenario vorgegeben wird. Somit kann die Restlaufzeit der Anlage genutzt werden und dennoch zuverlässig ein Produkt hergestellt werden.

Weiterhin vorteilhaft ist, wenn als Ersatzszenario ein Wechsel der elektronischen Komponente durch eine neue elektronische Komponente bestimmt wird. Sollte beispielsweise keine gebrauchte Komponente zur Verfügung stehen beziehungsweise eine Gebrauchtkomponente eine zu kurze Restlebenszeit aufweisen, so kann auch eine neue elektronische Komponente als Ersatzszenario bestimmt werden, wodurch zuverlässig der Betrieb der Anlage realisiert werden kann.

Hierzu kann weiterhin vorgesehen sein, dass eine Restlebenszeit der neuen elektronischen Komponente nach der Restlaufzeit der Anlage bestimmt wird. Sollte beispielsweise die Restlebenszeit der elektronischen Komponente länger sein als die Restlaufzeit der Anlage, so kann die neue elektronische Komponente, insbesondere deren Restlebenszeit, entsprechend bestimmt werden, und beispielsweise in einem Pool von gebrauchten elektronischen Komponente für die zukünftige Verwendung von weiteren Anlagen genutzt werden.

Eine weitere vorteilhafte Ausgestaltungsform sieht vor, dass als Ersatzszenario ein Wechsel der elektronischen Komponente durch eine gebrauchte elektronische Komponente bestimmt wird. Beispielsweise kann hierzu ein Pool von elektronischen Komponenten bereitgestellt werden, welche aus bereits ausgemusterten Anlagen entfernt wurden. Solle beispielsweise die Restlebenszeit der gebrauchten elektronischen Komponente im Wesentlichen mit der Restlaufzeit der Anlage übereinstimmen, so kann der Betrieb der Anlage realisiert werden und gleichzeitig auf gebrauchte elektronische Komponenten und somit ökologisch effizient zurückgegriffen werden.

Ferner hat es sich als vorteilhaft erwiesen, wenn als Ersatzszenario eine Anpassung des Anlagenbetriebs der Anlage bestimmt wird. Beispielsweise kann als Anpassung eine Änderung einer Herstellungszahl der Anlage und/oder eine Aktivierungshäufigkeit der Anlage und/oder eine Umgebungsanpassung der Anlage bestimmt werden. Insbesondere kann somit eine Anpassung des Restlaufszenarios der Anlage durch beispielsweise einen verschleißoptimierten Betrieb bereitgestellt werden. Hierzu kann eine Aktivierungshäufigkeit, insbesondere wie oft beispielsweise die Anlage ein- und ausgeschalten wird, oder entsprechende Aktivierungszyklen, Umgebungstemperaturen zur Reduzierung des zu überbrückenden Zeitraums oder dergleichen als Anpassung durchgeführt werden.

Ferner hat es sich als vorteilhaft erwiesen, wenn als Parameter ein Anschaffungszeitpunkt und/oder ein Wartungszustand der Anlage berücksichtigt werden. Insbesondere kann somit der aktuelle Zustand der Anlage zuverlässig bestimmt werden und auf Basis dessen wiederum die potentielle Restlebenszeit der elektronischen Komponente bestimmt werden. Somit kann zuverlässig ein Nutzer beim Betrieb der Anlage unterstützt werden.

Ferner hat es sich als vorteilhaft erwiesen, wenn als Parameter ein historisches Ausfallverhalten der Anlage und/oder der zumindest einen elektronischen Komponente berücksichtigt wird. Beispielsweise können entsprechende Szenarien berücksichtigt werden, bei denen die elektronische Komponente und/oder die Anlage bereits ausgefallen ist. Es kann dann die Eintretungswahrscheinlichkeit eines solchen Szenarios berücksichtigt werden, wodurch ferner auf den zukünftigen Ausfall der Anlage und/oder der elektronischen Komponente geschlossen werden kann. Somit kann auf Basis von historischen Daten zuverlässig der Betrieb der Anlage unterstützt werden.

Gemäß einer weiteren vorteilhaften Ausgestaltungsform wird als Parameter ein Reststückszahlszenario berücksichtigt. Insbesondere handelt es sich hierbei beispielsweise um eine Stückzahl pro Jahr, um Laufzeiten oder um Schichtmodelle. Auf Basis des Reststückszahlszenarios kann somit zuverlässig auf die Restlebenszeit der elektronischen Komponenten geschlossen werden.

Ebenfalls vorteilhaft ist, wenn mittels einer optischen Erfassungseinrichtung des Unterstützungssystems der Parameter erfasst wird. Beispielsweise kann eine Kamera vorgesehen sein, welche den Zustand der Anlage optisch erfasst und auf Basis des Zustands wiederum der aktuell charakterisierende Parameter beziehungsweise die Restlebenszeit der elektronischen Komponente bestimmt werden kann. Somit kann automatisiert das Verfahren durchgeführt werden.

Eine weitere vorteilhafte Ausgestaltungsform sieht vor, dass mittels einer Eingabeeinrichtung des Unterstützungssystems eine Eingabe eines Nutzers des Unterstützungssystems als der Parameter erfasst wird. Hierzu kann beispielsweise eine Tastatur, eine Maus oder auch ein berührungssensitiver Display bereitgestellt werden, auf welchen der Nutzer entsprechende Eingaben bezüglich des Parameters tätigen kann. Dadurch ist es ermöglich, dass zuverlässig der Anlagenbetrieb realisiert werden kann.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft daher auch ein computerlesbares Speichermedium mit einem Computerprogrammprodukt nach dem vorhergehenden Aspekt.

Ferner betrifft die Erfindung auch ein Unterstützungssystem für eine Nutzung einer Anlage mit zumindest einer elektronischen Komponente, mit zumindest einer Erfassungseinrichtung und einer elektronischen Recheneinrichtung, wobei das Unterstützungssystem zum Durchführen eines Verfahrens nach dem vorhergehenden Aspekt ausgebildet ist. Insbesondere wird das Verfahren mittels des Unterstützungssystems durchgeführt.

Die elektronische Recheneinrichtung weist beispielsweise Prozessoren, Schaltkreise, insbesondere integrierte Schaltkreise, sowie weitere elektronische Bauteile auf, um entsprechende Verfahrensschritte durchführen zu können.

Ein nochmals weiterer Aspekt der Erfindung betrifft auch eine Anlage mit einem Unterstützungssystem nach dem vorhergehenden Aspekt. Die Anlage ist dabei insbesondere als Produktionsanlage ausgebildet.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Die Erfindung wird nun anhand der Zeichnung näher erläutert. Hierzu zeigt die einzige Figur:

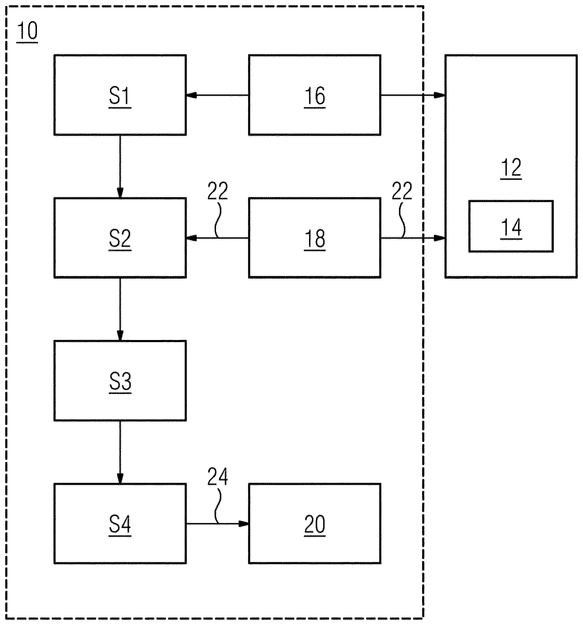

- FIG 1: ein schematisches Ablaufdiagramm gemäß einer Ausführungsform des Verfahrens, durchgeführt durch eine Ausführungsform eines Unterstützungssystems.

In der FIG sind gleiche oder funktionsgleiche Elemente mit gleichen Bezugszeichen versehen.

FIG 1 zeigt ein schematisches Ablaufdiagramm gemäß einer Ausführungsform des Verfahrens, durchgeführt durch eine Ausführungsform eines Unterstützungssystems 10. Das Unterstützungssystem 10 ist für eine Nutzung einer Anlage 12, welche insbesondere als Produktionsanlage ausgebildet ist, ausgebildet. Die Anlage 12 weist insbesondere zumindest eine elektronische Komponente 14, insbesondere eine Vielzahl von elektronischen Komponenten 14, auf. Das Unterstützungssystem 10 weist eine elektronische Recheneinrichtung 16 sowie eine Erfassungseinrichtung 18 auf. Ferner ist vorliegend gezeigt, dass beispielsweise das Unterstützungssystem 10 ferner auch eine Ausgabeeinrichtung 20, beispielsweise in Form eines Displays beziehungsweise einer Anzeigeeinrichtung aufweist.

Insbesondere ist in einem ersten Schritt S1 vorgesehen, dass eine Restlaufzeit der Anlage 12 mittels der elektronischen Recheneinrichtung 16 vorgegeben wird. Es erfolgt das Erfassen eines die Anlage 14 charakterisierenden Parameters 22 mittels der Erfassungseinrichtung 18 in einem zweiten Schritt S2. In einem dritten Schritt S3 wird die Restlebenszeit der zumindest einen elektronischen Komponente 14 in Abhängigkeit von dem Parameter 22 mittels der elektronischen Recheneinrichtung 16 bestimmt. In einem vierten Schritt S4 erfolgt das Bestimmen eines Ersatzszenarios 24 für die zumindest eine elektronische Komponente 14 in Abhängigkeit von der Restlebenszeit. Insbesondere wird beispielsweise das Ersatzszenario 24 auf der Ausgabeeinrichtung 20 entsprechend ausgegeben beziehungsweise angezeigt.

Dabei kann beispielsweise vorgesehen sein, dass als Ersatzszenario ein Wechsel der elektronischen Komponente 14 bestimmt wird, wobei als Ersatzszenario ein Wechsel der elektronischen Komponente durch eine neue elektronische Komponente 14 bestimmt wird oder ein Wechsel der elektronischen Komponente durch eine gebrauchte elektronische Komponente 14 bestimmt wird. Ferner kann bei dem Ersatz durch eine neue elektronische Komponente auch eine Restlebenszeit der neuen elektronischen Komponente 14 nach der Restlaufzeit der Anlage 12 bestimmt werden.

Ferner kann vorgesehen sein, dass als Ersatzszenario 24 eine Anpassung des Anlagenbetriebs der Anlage 12 bestimmt wird. Dabei kann als Anpassung eine Änderung einer Herstellungsstückzahl der Anlage 12 und/oder eine Aktivierungshäufigkeit der Anlage 12 und/oder eine Umgebungsanpassung der Anlage 12 bestimmt werden.

Als Parameter 22 kann beispielsweise ein Anschaffungszeitpunkt und/oder ein Wartungszustand der Anlage 12 berücksichtigt werden. Alternativ oder ergänzend kann als Parameter ein historisches Ausfallverhalten der Anlage 12 und/oder der zumindest einen elektronischen Komponente 14 berücksichtigt werden. Ebenfalls kann als Parameter 22 ein Reststückszahlszenario berücksichtigt werden.

Die Erfassungseinrichtung 18 kann beispielsweise als optische Erfassungseinrichtung des Unterstützungssystems 10 ausgebildet sein und/oder als Eingabeeinrichtung des Unterstützungssystems 10 ausgebildet sein, wobei dann durch Eingabe durch einen Nutzer des Unterstützungssystems 10 der Parameter 22 erfasst wird.

Insbesondere beschreibt somit die FIG ein Tool beziehungsweise Werkzeug zur Auswahl ökologisch und ökonomisch sinnvoller Szenarien zur Erreichung einer notwendigen Anlagenendlaufzeit. Als notwendige Inputgrößen werden dabei die Restlaufzeit der Anlage 12, der Ist-Zustand der Anlage 12, der Wartungszustand sowie der Anschaffungszeitpunkt und auch weitere Zustände vorgegeben beziehungsweise erfasst. Des Weiteren kann eine Historie über das Ausfallverhalten von der Anlage 12, der elektronischen Komponente 14 beziehungsweise auch von Elektronikbaugruppen, welche insbesondere aus eine Vielzahl von elektronischen Komponenten ausgebildet sind, berücksichtigt werden. Ferner kann auch ein Reststückszahlszenario, insbesondere eine Stückzahl pro Jahr, Laufzeiten sowie Schichtmodelle ebenfalls mit berücksichtigt werden.

Daraus ergibt sich ein theoretischer Ausfallzeitpunkt und der zu überbrückende Zeitraum beziehungsweise die noch zu fertigende Stückzahl beziehungsweise Zeitraum der Anlage 12.

Das Unterstützungssystem 10 kann dann wiederum eine Empfehlung ausgeben bezüglich des Matchings und der Auswahl aus einem Pool von zertifizierten Gebrauchtteilen zur Erfüllung der Restlaufzeit. Ferner kann eine Anpassung des Restlaufszenarios der Anlage 12 durch verschleißoptimierten Betrieb vorgestellt werden. Hierzu kann beispielsweise eine An- beziehungsweise Aus-Häufigkeit und Zyklen entsprechend angepasst werden beziehungsweise Umgebungstemperaturen zur Reduzierung des zu überbrückenden Zeitraums vorgeschlagen werden. Des Weiteren kann auch das Verwenden von neuen elektronischen Komponenten 14 und die zertifizierte Wiederverwendung dieser elektronischen Komponenten 14 nach der Endlaufzeit der Anlage 12 vorgeschlagen beziehungsweise berücksichtigt werden.

## Patentansprüche

1. Verfahren zum Betreiben eines Unterstützungssystems (10) für eine Nutzung einer Anlage (12) mit zumindest einer elektronischen Komponente (14), mit den Schritten:
- Vorgeben einer Restlaufzeit der Anlage (12) mittels einer elektronischen Recheneinrichtung (16) des Unterstützungssystems (10); (S1)
- Erfassen eines die Anlage (12) aktuell charakterisierenden Parameters (22) mittels einer Erfassungseinrichtung (18) des Unterstützungssystems (10); (S2)
- Bestimmen einer Restlebenszeit der zumindest einen elektronischen Komponente (14) in Abhängigkeit von dem Parameter (22) mittels der elektronischen Recheneinrichtung (16); (S3)
- Bestimmen eines Ersatzszenarios (24) für die zumindest eine elektronische Komponente (14) in Abhängigkeit von der Restlebenszeit. (S4)

2. Verfahren nach Anspruch 1, **dadurch gekennzeichnet, dass** als Ersatzszenario (24) ein Wechsel der elektronischen Komponente (14) bestimmt wird.

3. Verfahren nach Anspruch 2, **dadurch gekennzeichnet, dass** als Ersatzszenario (24) ein Wechsel der elektronischen Komponente (14) durch eine neue elektronische Komponente bestimmt wird.

4. Verfahren nach Anspruch 3, **dadurch gekennzeichnet, dass** eine Restlebenszeit der neuen elektronischen Komponente nach der Restlaufzeit der Anlage (12) bestimmt wird.

5. Verfahren nach Anspruch 2, **dadurch gekennzeichnet, dass** als Ersatzszenario (24) ein Wechsel der elektronischen Komponente (14) durch eine gebrauchte elektronische Komponente bestimmt wird.

6. Verfahren nach einem der vorhergehenden Ansprüche, **dadurch gekennzeichnet, dass**
als Ersatzszenario (24) eine Anpassung des Anlagenbetriebs der Anlage (12) bestimmt wird.

7. Verfahren nach Anspruch 6, **dadurch gekennzeichnet, dass** als Anpassung eine Änderung einer Herstellungsstückzahl der Anlage (12) und/oder eine Aktivierungshäufigkeit der Anlage (12) und/oder eine Umgebungsanpassung der Anlage (12) bestimmt wird.

8. Verfahren nach einem der vorhergehenden Ansprüche, **dadurch gekennzeichnet, dass**
als Parameter (22) ein Anschaffungszeitpunkt und/oder ein Wartungszustand der Anlage (12) berücksichtigt wird.

9. Verfahren nach einem der vorhergehenden Ansprüche, **dadurch gekennzeichnet, dass**
als Parameter (22) ein historisches Ausfallverhalten der Anlage (12) und/oder der zumindest einen elektronischen Komponente (14) berücksichtigt wird.

10. Verfahren nach einem der vorhergehenden Ansprüche,
**dadurch gekennzeichnet, dass**
als Parameter (22) ein Reststückzahlszenario berücksichtigt wird.

11. Verfahren nach einem der vorhergehenden Ansprüche,
**dadurch gekennzeichnet, dass**
mittels einer optischen Erfassungseinrichtung (18) des Unterstützungssystems (10) der Parameter (22) erfasst wird.

12. Verfahren nach einem der vorhergehenden Ansprüche,
**dadurch gekennzeichnet, dass**
mittels einer Eingabeeinrichtung des Unterstützungssystems (10) als Erfassungseinrichtung (18) eine Eingabe eines Nutzers des Unterstützungssystems (10) als der Parameter (22) erfasst wird.

13. Computerprogrammprodukt mit Programmcodemitteln, welche eine elektronische Recheneinrichtung (16) dazu veranlassen, wenn die Programmcodemittel von der elektronischen Recheneinrichtung (16) abgearbeitet werden, ein Verfahren nach einem der Ansprüche 1 bis 12 durchzuführen.

14. Computerlesbares Speichermedium mit einem Computerprogrammprodukt nach Anspruch 13.

15. Unterstützungssystem (10) für eine Nutzung einer Anlage (12) mit zumindest einer elektronischen Komponente (14), mit zumindest einer Erfassungseinrichtung (18) und einer elektronischen Recheneinrichtung (16), wobei das Unterstützungssystem (10) zum Durchführen eines Verfahrens nach einem der Ansprüche 1 bis 12 ausgebildet ist.
